# EUROPEAN PATENT APPLICATION

(11) **EP 4 468 398 A2**
(43) Date of publication of application: **27.11.2024**
(21) Application number: 24178288.7
(22) Date of filing: 27.05.2024
(51) Int. Cl.: H01M 4/136, H01M 4/58, H01M 4/62, H01M 10/054

(54) **POSITIVE ELECTRODE MATERIAL, POSITIVE ELECTRODE PLATE, SODIUM-ION SECONDARY BATTERY, AND ELECTRICAL DEVICE**

(30) Priority: 26.05.2023 CN 202310609202
(71) Applicant: Ningde Amperex Technology Ltd., Ningde City, Fujian 352100 (CN)
(72) Inventor: YUE, Yingying, Ningde City, Fujian Province, People s Republic of China, 352100 (CN)
(74) Representative: Icosa

(57) **Abstract**

A positive electrode material includes a matrix material Na₂Fe₂(SO₄)₃. A surface of the matrix material includes a polyanionic material and a carbon material. The polyanionic material includes at least one of a phosphate compound, a NASICON compound, a pyrophosphate compound, or a fluorinated phosphate compound. A molar ratio between the matrix material and the polyanionic material is (1-A): A, where 0 < A ≤ 0.1. Based on a mass of the positive electrode material, a mass percent of the carbon material is C%, satisfying: 0.5 ≤ C ≤ 5..

## Description

### TECHNICAL FIELD

This application relates to the field of electrochemical technology, and in particular, to a positive electrode material, a positive electrode plate, a sodium-ion secondary battery, and an electrical device.

### BACKGROUND

In recent years, secondary batteries such as a sodium-ion secondary battery system have attracted extensive attention by virtue of richness of resources, cost-effectiveness, environment-friendliness, and electrochemical properties similar to those of lithium-ion secondary batteries, and provide a new option for electrochemical energy storage, especially large-scale energy storage.

With an operating voltage as high as 3.8 V, Na₂Fe₂(SO₄)₃ (NFSO for short) is an ideal positive electrode material for sodium-ion secondary batteries. However, the NFSO material is air-sensitive, and the surface of the material is prone to water absorption and oxidation. Therefore, a new NFSO-based positive electrode material is urgently needed to minimize the risk of water absorption and oxidation and enhance the electrochemical performance of the sodium-ion secondary batteries.

### SUMMARY

An objective of this application is to provide a positive electrode material, a positive electrode plate, a sodium-ion secondary battery, and an electrical device to improve the electrochemical performance of the sodium-ion secondary battery. Specific technical solutions are as follows:

A first aspect of this application provides a positive electrode material. The positive electrode material includes a matrix material Na₂Fe₂(SO₄)₃. A surface of the matrix material includes a polyanionic material and a carbon material. The polyanionic material includes at least one of a phosphate compound, a NASICON compound, a pyrophosphate compound, or a fluorinated phosphate compound. A molar ratio between the matrix material and the polyanionic material is (1-A): A, where 0 < A ≤ 0.1. Based on a mass of the positive electrode material, a mass percent of the carbon material is C%, satisfying: 0.5 ≤ C ≤ 5. By controlling the types of the matrix material and the polyanionic material in the positive electrode material, and by controlling the molar ratio between the matrix material and the polyanionic material as well as the mass percent of the carbon material in the positive electrode material to fall within the ranges specified herein, the positive electrode material is endowed with a relatively high specific capacity and stability, thereby improving the electrochemical performance of the sodium-ion secondary battery.

In some embodiments of this application, at least a part of the surface of the matrix material is covered by the polyanionic material and the carbon material. A coating rate of the polyanionic material and carbon material on the matrix material is greater than or equal to 50%, thereby making the coated NFSO stable to air, and increasing the specific discharge capacity of the NFSO.

In some embodiments of this application, a specific surface area of the positive electrode material is BET m²/g, satisfying: 0.5 ≤ BET ≤ 15, thereby reducing the contact area between the positive electrode material and air on the one hand, and in turn, reducing the hygroscopicity of the positive electrode material. On the other hand, this setting can reduce the contact area between the positive electrode material and an electrolyte solution, and reduce side reactions between the positive electrode material and the electrolyte solution, thereby reducing the gas production of the sodium-ion secondary battery.

In some embodiments of this application, a particle diameter Dᵥ₅₀ of the positive electrode material is 2 µm to 8 µm, thereby facilitating exertion of the specific capacity and C-rate performance of the positive electrode material, and also improving the processability. Undersized particles make it difficult to stir and disperse the material, and oversized particles are detrimental to exerting the specific capacity and the C-rate performance.

In some embodiments of this application, a tap density of the positive electrode material is ρ g/cm³, satisfying: ρ ≥ 0.8, thereby increasing the compaction density of the positive electrode material, and in turn, increasing the energy density of the sodium-ion secondary battery.

In some embodiments of this application, the phosphate compound includes NaMPO₄, where M is selected from Fe or Mn; the NASICON compound includes NaₓQ₂(XO₄)₃, where 1 ≤ x ≤ 4, Q includes at least one of V, Fe, Ni, Mn, or Ti, and X includes at least one of P, S, or Si; the pyrophosphate compound includes NaₘZ(PO₄)ₙ(P₂O₇)_{q}, where 2 ≤ m < 10, 0 ≤ n ≤ 4, 1 ≤ q < 10, and Z includes at least one of Fe, Mn, or Co; and the fluorinated phosphate compound includes at least one of NaVPO₄F or Na₃(VO_{1-y}PO₄)₂F_{1+2y}, where 0 ≤ y ≤ 1. By using the phosphate compound falling within the above range, the matrix material is more stable to the environment, and the impact on the deintercalation of Na⁺ of the matrix material is smaller during charging and discharging. By using the NASICON compound falling within the above range, not only the matrix material is more stable to the environment, but also the impact on the ionic conductivity of the matrix material is smaller, and the thermal stability of the matrix material is improved. By using the pyrophosphate compound falling within the above range, not only the matrix material is more stable to the environment, but also the cycle performance and thermal stability of the positive electrode material are improved. By using the fluorinated phosphate compound falling within the above range, not only the matrix material is more stable to air, but also the impact on the energy density of the matrix material is smaller.

In some embodiments of this application, Dᵥ₅₀ of the polyanionic material is 20 nm to 100 nm, and Dᵥ₉₉ of the polyanionic material is 20 nm to 200 nm. By controlling the Dᵥ₅₀ and Dᵥ₉₉ of the polyanionic material to fall within the ranges specified herein, the migration paths of Na⁺ and electrons are shortened, thereby increasing the charging and discharging speed. This is also conducive to exerting the electrochemical performance of the polyanionic material and the electrochemical performance of the NFSO. In addition, the polyanionic material layer formed by the polyanionic material can be thinner while still coating the NFSO at a high coating rate.

A second aspect of this application provides a positive electrode plate. The positive electrode plate includes the positive electrode material according to any one of the foregoing embodiments. Therefore, the positive electrode plate according to this application is of high electronic conductivity and ionic conductivity.

In some embodiments of this application, a compaction density of the positive electrode plate is CD g/cm³, satisfying: CD ≥ 1.6. By controlling the compaction density of the positive electrode plate to fall within the range specified herein, a sodium-ion secondary battery of a high energy density can be obtained favorably.

A third aspect of this application provides a sodium-ion secondary battery. The sodium-ion secondary battery includes the positive electrode plate according to any one of the foregoing embodiments. Therefore, the sodium-ion secondary battery according to this application achieves good electrochemical performance.

A fourth aspect of this application provides an electrical device. The electrical device includes the sodium-ion secondary battery according to any one of the foregoing embodiments. Therefore, the electrical device according to this application achieves good operating performance.

Some of the beneficial effects of this application are as follows:
This application provides a positive electrode material, a positive electrode plate, a sodium-ion secondary battery, and an electrical device. The positive electrode material includes a matrix material Na₂Fe₂(SO₄)₃. A surface of the matrix material includes a polyanionic material and a carbon material. The polyanionic material includes at least one of a phosphate compound, a NASICON compound, a pyrophosphate compound, or a fluorinated phosphate compound. A molar ratio between the matrix material and the polyanionic material is (1-A): A, where 0 < A ≤ 0.1. Based on a mass of the positive electrode material, a mass percent of the carbon material is C%, satisfying: 0.5 ≤ C ≤ 5. By controlling the types of the matrix material and the polyanionic material in the positive electrode material, and by controlling the molar ratio between the matrix material and the polyanionic material as well as the mass percent of the carbon material in the positive electrode material to fall within the ranges specified herein, the positive electrode material is endowed with a relatively high specific capacity and stability, thereby improving the electrochemical performance of the sodium-ion secondary battery.

Definitely, a single product or method in which the technical solution of this application is implemented does not necessarily achieve all of the above advantages concurrently.

### DETAILED DESCRIPTION

The following clearly and fully describes the technical solutions in the embodiments of this application. Apparently, the described embodiments are merely a part of but not all of the embodiments of this application. All other embodiments derived by a person of ordinary skill in the art based on the embodiments of this application without making any creative efforts still fall within the protection scope of this application.

A first aspect of this application provides a positive electrode material. The positive electrode material includes a matrix material Na₂Fe₂(SO₄)₃ (that is, NFSO). A surface of the matrix material includes a polyanionic material and a carbon material. The polyanionic material includes at least one of a phosphate compound, a NASICON compound, a pyrophosphate compound, or a fluorinated phosphate compound. A molar ratio between the matrix material and the polyanionic material is (1-A): A, where 0 < A ≤ 0.1. Based on a mass of the positive electrode material, a mass percent of the carbon material is C%, satisfying: 0.5 ≤ C ≤ 5. Specifically, the molar ratio between the matrix material and the polyanionic material may be 0.99: 0.01, 0.97: 0.03, 0.95: 0.05, 0.93: 0.07, 0.91: 0.09, 0.9: 0.1, or a value falling within a range formed by any two thereof. The mass percent C% of the carbon material may be 0.5%, 0.7%, 0.9%, 1%, 1.5%, 1.7%, 1.9%, 2%, 2.5%, 2.7%, 2.9%, 3%, 3.5%, 3.7%, 3.9%, 4%, 4.5%, 4.7%, 4.9%, 5%, or a value falling within a range formed by any two thereof. Without being limited to any theory, when the molar ratio between the matrix material and the polyanionic material is overly low (for example, less than 0.9: 0.1), the energy density of the sodium-ion secondary battery is impaired. When the molar ratio between the matrix material and the polyanionic material is overly high (for example, higher than 0.99: 0.01), the polyanionic material is unable to effectively cover the matrix material and unable to effectively isolate the matrix material from air, and unable to improve the stability of the matrix material. When the mass percent of the carbon material is overly low (for example, lower than 0.5%), the electronic conductivity of the NFSO is impaired. When the mass percent of the carbon material is overly high (for example, higher than 5%), deintercalation and intercalation of Na⁺ are disabled due to inactivity of the carbon material, thereby impairing the specific capacity of the NFSO. By synergistically controlling the molar ratio between the matrix material and the polyanionic material as well as the mass percent of the carbon material to fall within the ranges specified herein, not only the matrix material can be effectively isolated from air to improve the electrochemical performance of the sodium-ion secondary battery, but also the NFSO is endowed with a relatively high electronic conductivity, thereby exerting the specific capacity of the NFSO favorably.

In the positive electrode material according to this application, the surface of the matrix material includes a polyanionic material and a carbon material. On the one hand, because the polyanionic material is also a positive electrode material of sodium-ion secondary batteries, the polyanionic material is electronically conductive and ionically conductive, brings little impact on the electronic conductivity and ionic conductivity of the NFSO, and implements more effective isolation between the NFSO and air, thereby increasing the stability to air. On the other hand, the polyanionic material enables deintercalation of Na⁺, and can function as a positive active material, thereby bringing little impact on the exertion of the specific capacity of the NFSO. Moreover, when the surface of the matrix material includes a carbon material, the electronic conductivity of the positive electrode material is improved. The synergistic effect of the polyanionic material and the carbon material is conducive to exerting the electrochemical performance of the NFSO.

Based on the above findings, the positive electrode material according to this application includes a matrix material. The surface of the matrix material includes a polyanionic material and a carbon material. Controlling the molar ratio between the matrix material and the polyanionic material as well as the mass percent of the carbon material in the positive electrode material to fall within the ranges specified herein, the positive electrode material is endowed with a relatively high specific capacity and stability, thereby improving the electrochemical performance of the sodium-ion secondary battery.

In some embodiments of this application, at least a part of the surface of the matrix material is covered by the polyanionic material and the carbon material. A coating rate of the polyanionic material and carbon material on the matrix material is greater than or equal to 50%. As an example, the coating rate of the polyanionic material and carbon material on the matrix material may be 50%, 55%, 60%, 65%, 70%, 75%, 80%, 85%, 90%, 95%, 100%, or a value falling within a range formed by any two thereof. A part of the surface of the matrix material includes the polyanionic material and carbon material, or the entire surface of the matrix material includes the polyanionic material and the carbon material. By controlling the coating rate of the polyanionic material and carbon material on the matrix material to fall within the range specified herein, the contact area between the NFSO and the air is made to be relatively small, and therefore, the coated NFSO is more stable to air, the NFSO stored in the air is less hygroscopic, less NFSO is dissolved, and the specific discharge capacity of the NFSO is higher.

In some embodiments, a specific surface area of the positive electrode material is BET m²/g, satisfying: 0.5 ≤ BET < 15. As an example, the BET may be 0.5, 1, 2, 3, 4, 5, 6, 7, 8, 9, 10, 11, 12, 13, 14, 15, or a value falling within a range formed by any two thereof. By controlling the value of BET to fall within the range specified herein, on the one hand, the contact area between the positive electrode material and air is reduced, thereby reducing the hygroscopicity of the positive electrode material. On the other hand, the contact area between the positive electrode material and the electrolyte solution is reduced, thereby reducing side reactions between the positive electrode material and the electrolyte solution, and reducing the gas production of the sodium-ion secondary battery.

In some embodiments of this application, the particle diameter Dᵥ₅₀ of the positive electrode material is 2 µm to 8 µm. As an example, the particle diameter Dᵥ₅₀ of the positive electrode material may be 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, or a value falling within a range formed by any two thereof. By controlling the particle diameter Dᵥ₅₀ of the positive electrode material to fall within the range specified herein, the specific capacity and C-rate performance of the positive electrode material can be exerted favorably, and the processability is improved favorably. Undersized particles make it difficult to stir and disperse the material, and oversized particles are detrimental to exerting the specific capacity and the C-rate performance.

As used herein, the term "Dᵥ₅₀" represents a particle diameter value at which the cumulative volume percentage of the material particles reaches 50% in a volume-based particle size distribution curve viewed from a small-diameter side.

In some embodiments of this application, a tap density of the positive electrode material is ρ g/cm³, satisfying: ρ ≥ 0.8. As an example, ρ may be 0.8, 0.9, 1, 1.2, or a value falling within a range formed by any two thereof. In some embodiments of this application, 0.9 ≤ ρ ≤ 1.2. By controlling the value of the tap density of the positive electrode material to fall within the range specified herein, the compaction density of the positive electrode material can be increased, thereby increasing the energy density of the sodium-ion secondary battery.

In some embodiments of this application, the phosphate compound includes NaMPO₄, where M is selected from Fe or Mn; the NASICON compound includes NaₓQ₂(XO₄)₃, where 1 ≤ x ≤ 4, Q includes at least one of V, Fe, Ni, Mn, or Ti, and X includes at least one of P, S, or Si; the pyrophosphate compound includes NaₘZ(PO₄)ₙ(P₂O₇)_{q}, where 2 ≤ m < 10, 0 ≤ n ≤ 4, 1 ≤ q < 10, and Z includes at least one of Fe, Mn, or Co; and the fluorinated phosphate compound includes at least one of NaVPO₄F or Na₃(VO_{1-y}PO₄)₂F_{1+2y}, where 0 ≤ y ≤ 1. By using the phosphate compound falling within the above range, the matrix material is more stable to the environment, and the impact on the deintercalation of Na⁺ of the matrix material is smaller during charging and discharging. NASICON is natrium superionic conductor, and the NASICON compound possesses an open three-dimensional framework structure, a high ionic conductivity, and good thermal stability. By using the NASICON compound falling within the above range, not only the matrix material is more stable to the environment, but also the impact on the ionic conductivity of the matrix material is smaller, and the thermal stability of the matrix material is improved. The pyrophosphate compound possesses good structural stability, thermal stability, and high fluidity of sodium ions. By using the pyrophosphate compound falling within the above range, not only the matrix material is more stable to the environment, but also the cycle performance and thermal stability of the positive electrode material are improved. The fluorinated phosphate compound is highly stable to air. The F of relatively high electronegativity introduced into a material is typically used for replacing the O in PO₄³⁻to enhance the inducing effect of the phosphate ion and increase the voltage. By using fluorinated phosphate compound falling within the range specified herein, the material possesses a relatively high voltage plateau. When the surface of the matrix material includes a fluorinated phosphate compound, not only the matrix material is more stable to air, but also the impact on the energy density of the matrix material is smaller.

In some embodiments of this application, Dᵥ₅₀ of the polyanionic material is 20 nm to 100 nm, and Dᵥ₉₉ of the polyanionic material is 20 nm to 200 nm. By controlling the Dᵥ₅₀ and Dᵥ₉₉ of the polyanionic material to fall within the ranges specified herein, the migration paths of Na⁺ and electrons are shortened, thereby increasing the charging and discharging speed. This is also conducive to exerting the electrochemical performance of the polyanionic material and the electrochemical performance of the NFSO. In addition, the polyanionic material layer formed by the polyanionic material can be thinner while still coating the NFSO at a high coating rate.

As used herein, the term "Dᵥ₉₉" represents a particle diameter value at which the cumulative volume percentage of the material particles reaches 99% in a volume-based particle size distribution curve viewed from a small-diameter side.

The method for preparing the positive electrode material is not particularly limited herein. As an example, a method for preparing the positive electrode material may include, but is not limited to, the following steps: Adding feedstock into deionized water based on a stoichiometric ratio of Na₂Fe₂(SO₄)₃ to form a solution, adding an antioxidant and a carbon source into the solution, and then stirring the mixture to obtain the precursor solution; spray-drying the precursor solution by use of a spray-dryer to obtain a dried precursor; calcining, crushing, and sieving the dried precursor to obtain a Na₂Fe₂(SO₄)₃-carbon composite material; weighing out feedstock based on the stoichiometric ratio of the polyanionic material, mixing the weighed feedstock, and then drying, sintering, crushing, and sieving the mixture to obtain a polyanionic material; mixing the Na₂Fe₂(SO₄)₃-carbon composite material with the polyanionic material at a specified molar ratio, and then mixing the constituents mechanically to obtain a positive electrode material. The carbon source is not particularly limited herein, as long as the objectives of this application can be achieved. For example, the carbon source may be acetylene black. The antioxidant is not particularly limited herein, as long as the objectives of this application can be achieved. For example, the antioxidant may be ascorbic acid (C₆H₈O₆).

Generally, the specific surface area and the coating rate of the positive electrode material may be adjusted by adjusting the mechanical mixing duration of the matrix material and the polyanionic material. For example, by increasing the mechanical mixing duration, the specific surface area decreases; by decreasing the mechanical mixing duration, the specific surface area increases; by increasing the mechanical mixing duration, the coating rate increases; and, by decreasing the mechanical mixing duration, the coating rate decreases. The particle diameter Dᵥ₅₀ of the positive electrode material may be adjusted by changing the inlet temperature and/or the feeding speed of the spray-dryer. For example, by increasing the inlet temperature, the particle diameter Dᵥ₅₀ of the positive electrode material increases; by decreasing the inlet temperature, the particle diameter Dᵥ₅₀ of the positive electrode material decreases; by increasing the feeding speed, the particle diameter Dᵥ₅₀ of the positive electrode material increases, the interior of the particles is relatively loose, and the tap density decreases; by decreasing the feeding speed, the particle diameter Dᵥ₅₀ of the positive electrode material decreases, the interior of the particles is relatively dense, and the tap density increases.

The method for adjusting the particle diameter of the polyanionic material is not limited herein, as long as the objectives of this application can be achieved. For example, the particle diameter of the polyanionic material generally increases with the increase of the sintering temperature, and therefore, the particle diameter of the polyanionic material may be adjusted by adjusting the sintering temperature, and the polyanionic materials of different average particle diameters may be obtained by sieving.

The compaction density of the positive electrode plate generally increases with the increase of the cold-pressing pressure. The compaction density of the positive electrode plate in this application may be adjusted by adjusting the cold-pressing pressure during preparation of the positive electrode plate.

A second aspect of this application provides a positive electrode plate. The positive electrode plate includes the positive electrode material according to any one of the foregoing embodiments. Therefore, the positive electrode plate according to this application is of high electronic conductivity and ionic conductivity.

In some embodiments of this application, a compaction density of the positive electrode plate is CD g/cm³, satisfying: CD ≥ 1.6. As an example, CD may be 1.6, 1.7, 1.8, 1.9, 2, 2.1, 2.2, or a value falling within a range formed by any two thereof. In some embodiments of this application, 1.7 ≤ CD ≤ 1.9. By controlling the compaction density of the positive electrode plate to fall within the range specified herein, a sodium-ion secondary battery of a high energy density can be obtained favorably.

In this application, the positive electrode plate includes a positive current collector and a positive electrode material layer disposed on at least one surface of the positive current collector. "Positive electrode material layer disposed on at least one surface of the positive current collector" means that the positive electrode material layer may be disposed on one surface of the positive current collector or on both surfaces of the positive electrode current collector along the thickness direction of the current collector. It is hereby noted that the "surface" here may be the entire region of the positive current collector, or a partial region of the positive current collector, without being particularly limited herein, as long as the objectives of the application can be achieved.

The positive current collector is not particularly limited herein, as long as the objectives of this application can be achieved. For example, the positive current collector may include aluminum foil, aluminum alloy foil, a composite current collector (for example, an aluminum-carbon composite current collector), or the like.

The positive electrode material layer further includes a conductive agent and a binder. The types of the conductive agent and binder are not particularly limited herein, as long as the objectives of this application can be achieved. For example, the binder may include, but is not limited to, one or more of polyacrylate ester, polyimide, polyamide, polyamideimide, polyvinylidene fluoride, poly(styrene-co-butadiene) (styrene-butadiene rubber), sodium alginate, polyvinyl alcohol, polytetrafluoroethylene, polyacrylonitrile, sodium carboxymethylcellulose, potassium carboxymethylcellulose, sodium hydroxymethyl cellulose, or potassium hydroxymethyl cellulose. The conductive agent may include, but is not limited to, at least one of conductive carbon black (Super P), carbon nanotubes (CNTs), carbon fibers, flake graphite, Ketjen black, graphene, a metal material, or a conductive polymer. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. The mass percentages of the positive electrode material, conductive agent, or binder in the positive electrode material layer are not particularly limited herein, and may be selected by a person skilled in the art as actually required, as long as the objectives of this application can be achieved.

The thicknesses of the positive current collector and the positive electrode material layer are not particularly limited herein, as long as the objectives of this application can be achieved. For example, the thickness of the positive current collector is 6 µm to 12 µm, and the thickness of the positive electrode material layer is 30 µm to 120 µm. The thickness of the positive electrode plate is not particularly limited herein, as long as the objectives of this application can be achieved. For example, the thickness of the positive electrode plate is 36 µm to 250 µm.

Optionally, the positive electrode plate may further include a conductive layer. The conductive layer is located between the positive current collector and the positive electrode material layer. The constituents of the conductive layer are not particularly limited herein, and the conductive layer may be a conductive layer commonly used in the art. The conductive layer includes a conductive agent and a binder. The conductive agent and binder in the conductive layer are not particularly limited herein. For example, the conductive agent and binder may be at least one of the conductive agents and binders enumerated above.

A third aspect of this application provides a sodium-ion secondary battery. The sodium-ion secondary battery includes the positive electrode plate according to any one of the foregoing embodiments. Therefore, the sodium-ion secondary battery according to this application achieves good electrochemical performance.

In this application, the sodium-ion secondary battery further includes a negative electrode plate. The negative electrode plate may include a negative current collector and a negative electrode material layer disposed on at least one surface of the negative current collector. The negative current collector is not particularly limited herein, as long as the objectives of this application can be achieved. For example, the current collector may include a copper foil, a copper alloy foil, a nickel foil, a stainless steel foil, a titanium foil, foamed nickel, foamed copper, a composite current collector, or the like. The negative electrode material layer in this application includes a negative active material, a conductive agent, and a thickener. The negative active material of this application may include at least one of a metal oxide, a metal sulfide, a metal phosphide, a Sb-based negative electrode material, hard carbon, soft carbon, sodium metal, or the like. The metal oxide may include at least one of cobalt oxide, iron oxide, nickel oxide, or copper oxide. The metal sulfide may include at least one of tungsten disulfide, molybdenum disulfide, or tin disulfide. The metal phosphide may include at least one of lithium phosphide or sodium phosphide. The Sb-based negative electrode material may include at least one of a Sb-C composite material, a NiSb alloy, Sb₂O₃, or Sb₂O₄. The thicknesses of the negative current collector and the negative electrode material layer are not particularly limited herein, as long as the objectives of this application can be achieved. For example, the thickness of the negative current collector is 6 µm to 10 µm, and the thickness of the negative electrode material layer is 30 µm to 120 µm. The thickness of the negative electrode plate is not particularly limited herein, as long as the objectives of this application can be achieved. For example, the thickness of the negative electrode plate is 36 µm to 250 µm.

In this application, the sodium-ion secondary battery further includes a separator. The separator is configured to separate the positive electrode plate from the negative electrode plate, prevent a short circuit inside the sodium-ion secondary battery, and allow electrolyte ions to pass freely without affecting the electrochemical charge and discharge processes. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide film (PA), spandex, or aramid. The type of the separator may include at least one of a woven film, a non-woven film, a microporous film, a composite film, a laminated film, or a spinning film.

For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may include at least one of: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited herein. For example, the binder may be at least one of the binders enumerated above. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-cohexafluoropropylene).

In this application, the sodium-ion secondary battery further includes an electrolyte solution. The electrolyte solution includes a sodium salt and a nonaqueous solvent. The sodium salt may include at least one of NaPF₆, NaOTF, NaFSI, NaTFSI, NaBF₄, NaBOB, NaDFOB, or NaClO₄. The concentration of the sodium salt in the electrolyte solution is not particularly limited herein, as long as the objectives of this application can be achieved. For example, the concentration of the sodium salt in the electrolyte solution is 0.9 mol/L to 1.5 mol/L. As an example, the concentration of the sodium salt in the electrolyte solution may be 0.9 mol/L, 1.0 mol/L, 1.1 mol/L, 1.3 mol/L, 1.5 mol/L, or a value falling within a range formed by any two thereof. The nonaqueous solvent is not particularly limited herein, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The sodium-ion secondary battery of this application further includes a packaging bag. The packaging bag is configured to accommodate a positive electrode plate, a separator, a negative electrode plate, an electrolyte solution, and other components known in the art for use in the sodium-ion secondary battery. Such other components are not limited herein. The pocket is not particularly limited herein, and may be a pocket well-known in the art, as long as the objectives of this application can be achieved.

The process of preparing the sodium-ion secondary battery in this application is well known to a person skilled in the art, and is not particularly limited herein. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a sodium-ion secondary battery; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a sodium-ion secondary battery. In addition, an overcurrent prevention element, a guide plate, and the like may be placed into a pocket as required, so as to prevent the rise of internal pressure, overcharge, and overdischarge of the sodium-ion secondary battery.

A fourth aspect of this application provides an electrical device. The electrical device includes the sodium-ion secondary battery according to any one of the foregoing embodiments. Therefore, the electrical device according to this application achieves good operating performance.

The electrical device of this application is not particularly limited herein, and may be any electrical device known in the prior art. In some embodiments, the electrical device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, sodium-ion capacitor, or the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test Methods and Devices

### Measuring the specific surface area:

Measuring the specific surface area of the intact positive electrode material in each embodiment and each comparative embodiment by a nitrogen adsorption or desorption method by using a specific surface area analyzer (model: Tristar II 3020M) with reference to the national standard *Determination of Specific Surface Area of Solids By Gas Adsorption Using BET Method* (GB/T 19587-2017).

### Determining the coating rate:

Cutting the intact positive electrode plate in each embodiment and each comparative embodiment by using an ion beam cross-section polisher (model: JEOL-IB-09010CP), so as to obtain a cross-section. Observing the cross-section by using a scanning electron microscope (SEM, model: Zeiss Sigma 02-33) at an appropriate magnification (for example, 1000× to 30000×), identifying the perimeter L₁ of the matrix material by using the Image J software, and also identifying the total perimeter L₂ of the uncoated region, and calculating the coating rate as: M = 1 - L₂/L₁.

### Measuring the particle diameter of the positive electrode material:

Performing a particle size distribution test on the intact positive electrode material by using a Malvern particle size analyzer with reference to the national standard *Particle Size Analysis-Laser Diffraction Methods* (GB/T 19077-2016), so as to obtain the median diameter Dᵥ₅₀ of the positive electrode material.

### Measuring the particle diameter of the polyanionic material:

Performing a particle size distribution test on the polyanionic material by using a Malvern particle size analyzer with reference to the national standard *Particle Size Analysis-Laser Diffraction Methods* (GB/T 19077-2016), so as to obtain the particle diameters Dᵥ₅₀ and Dᵥ₉₉ of the polyanionic material.

### Measuring the tap density:

Weighing 50 grams of positive electrode material powder, putting all the powder into a measuring cylinder, and then fixing the measuring cylinder together with the powder onto a measuring instrument, and vibrating the measuring cylinder; visually determining the volume of the powdered material based on the height of the surface of the powdered material after the vibration, and then calculating the tap density, where the measuring instrument is Dandong Bettersizer BT-301.

### Measuring the compaction density:

Compaction density of the positive electrode plate = mass of the positive electrode material layer per unit area (g/mm²)/thickness of the positive electrode material layer (mm). Disassembling a discharged sodium-ion secondary battery, and then taking out a positive electrode plate from the battery. Soaking the positive electrode plate in dimethyl carbonate (DMC) for 30 minutes, removing the electrolyte solution and by-products from the surface of the positive electrode plate, and then drying the positive electrode plate in a ventilating cabinet at 25 °C for 4 hours. Taking out the dried positive electrode plate, measuring the thickness of the positive electrode material layer in the positive electrode plate by using a ten-thousandth micrometer, and then die-cutting the positive electrode plate to obtain a small circular piece that is 1540.25 mm² in area. Weighing the mass m₁ of the small circular piece by using a balance, and then weighing the mass m₂ of a small circular piece of the same area cut out from a current collector. Calculating the mass of the positive electrode material as: m₁ - m₂, and then calculating the compaction density of the positive electrode plate in accordance with the above formula.

### Testing the specific capacity:

Mixing the positive electrode materials in different states in each embodiment and each comparative embodiment, the binder polyvinylidene difluoride, and the conductive agent acetylene black at a mass ratio of 80: 10: 10 in a dry room with a temperature of 25 °C and a relative humidity less than or equal to 2%. Adding an appropriate amount of N-methylpyrrolidone (NMP) solvent, and stirring well to form a homogeneous positive electrode slurry. Applying the positive electrode slurry onto a 10 µm-thick aluminum foil (positive current collector), performing oven-drying and cold-pressing, and then die-cutting the foil into ø14 mm small circular pieces that serve as positive electrode plates. Assembling a button half-cell by using a sodium sheet as a negative electrode plate, using a 12 µm-thick polypropylene film as a separator, using a mixed solution of 1 mol/L NaPF₆ together with ethylene carbonate (EC) and propylene carbonate (PC) (the volume ratio between the EC and the PC is 1: 1) as an electrolyte solution.

Performing a charge-discharge test on the half-cell in a Land battery test system (LAND CT2001A). Performing charge-discharge operations for a first cycle at an operating voltage of 2.0 V to 4.2 V and a current density of 10 mA/g, and recording the first-cycle specific discharge capacity.

Measuring the specific discharge capacity of the positive electrode material in the intact state, denoted as C1; and measuring the specific discharge capacity of the positive electrode material in the A2 state, denoted as C2.

### Embodiment 1

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Weighing out a corresponding amount of the feedstocks Na₂CO₃, NH₄VO₃, and NH₄H₂PO₄ at the stoichiometric ratio of Na₃V₂(PO₄)₃ (NVP). Putting the weighed feedstocks into a ball-milling jar. Milling the feedstocks by a wet ball-milling method in a planetary ball mill (the ball-milling medium is acetone), during which the ball-milling speed is 300 r/min, and the ball-milling duration is 3 h. Putting the ball-milled product into a vacuum oven for drying at 60 °C. Sintering the dried product into a vacuum tube furnace filled with nitrogen. Increasing the temperature to 350 °C and sintering for 4 h, and then increasing the temperature to 800 °C and sintering for 8 h, and then crushing the sintered product into powder, and sieving the powder to produce an NVP polyanionic material. The Dᵥ₅₀ of the NVP polyanionic material is 30 nm, and the Dᵥ₉₉ of the NVP polyanionic material is 200 nm.

Mixing the Na₂Fe₂(SO₄)3-C composite material and the NVP polyanionic material at a molar ratio of 0.95: 0.05. Mechanically mixing the mixture with a three-dimensional vibratory ball mill at a speed of 1200 rpm for 60 min to produce a positive electrode material, where the surface of the positive electrode material includes the NVP polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### <Preparing a positive electrode plate>

Mixing the intact positive electrode material, a binder polyvinylidene difluoride, and a conductive agent acetylene black at a mass ratio of 80: 10: 10 in a dry room at a temperature of 25 °C and a relative humidity less than or equal to 2%. Adding an N-methylpyrrolidone (NMP) solvent, and stirring well to form a positive electrode slurry with a solid content of 68%. Applying the positive electrode slurry onto a 10 µm-thick aluminum foil by using a scraper until the coating layer of the slurry is 100 µm thick, and then drying the foil at 70 °C for 12 h, and then cold-pressing the foil at a cold-pressing pressure of 50 T. Subsequently, die-cutting the foil into ø14 mm small circular pieces that serve as positive electrode plates in the intact state.

Mixing the positive electrode material in the A2 state, the binder polyvinylidene difluoride, and the conductive agent acetylene black at a mass ratio of 80: 10: 10 in a dry room with a temperature of 25 °C and a relative humidity less than or equal to 2%. Adding an N-methylpyrrolidone (NMP) solvent, and stirring well to form a positive electrode slurry with a solid content of 68%. Applying the positive electrode slurry onto a 10 pm-thick aluminum foil by using a scraper until the coating layer of the slurry is 100 µm thick, and then drying the foil at 70 °C for 12 h, and then cold-pressing the foil at a cold-pressing pressure of 50 T. Subsequently, die-cutting the foil into ø14 mm small circular pieces that serve as positive electrode plates in the A2 state.

### <Preparing a negative electrode plate>

Die-cutting a sodium sheet into ø14 mm circular pieces that serve as negative electrode plates.

### <Preparing an electrolyte solution>

Mixing ethylene carbonate and propylene carbonate at a volume ratio of 1: 1 in a dry room with a temperature of 25 °C and a relative humidity less than or equal to 2% to form a nonaqueous solvent, and then adding a sodium salt NaPF₆ into the nonaqueous solvent, and dissolving and stirring the sodium salt well to produce an electrolyte solution. The molar concentration of NaPF₆ is 1 mol/L.

### <Preparing a separator>

Using a 12 pm-thick porous polyethylene film (supplied by Celgard) as a separator.

### <Preparing a sodium-ion button half-cell>

Stacking the negative electrode plate, the separator, the intact positive electrode plate sequentially to assemble a button half-cell in a glovebox, denoted as an intact button half-cell.

Stacking the negative electrode plate, the separator, the positive electrode plate in the A2 state sequentially to assemble a button half-cell in the glovebox, denoted as a button half-cell in the A2 state.

### Embodiment 2

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Weighing out a corresponding amount of the feedstocks FePO₄, and anhydrous Na₃PO₄ at the stoichiometric ratio of Na₄Fe₃(PO₄)₂P₂O₇ (N₄FPP). Putting the weighed feedstocks into a ball-milling jar. Milling the feedstocks by a wet ball-milling method in a planetary ball mill (the ball-milling medium is acetone), during which the ball-milling speed is 300 r/min, and the ball-milling duration is 3 h. Putting the ball-milled product into a vacuum oven for drying at 60 °C. Sintering the dried product into a nitrogen-filled vacuum tube furnace at 500 °C for 10 h, and then crushing the sintered product into powder, and sieving the powder to produce an N₄FPP polyanionic material. The Dᵥ₅₀ of the N₄FPP polyanionic material is 30 nm, and the Dᵥ₉₉ of the N₄FPP polyanionic material is 200 nm.

Mixing the Na₂Fe₂(SO₄)3-C composite material and the N₄FPP polyanionic material at a molar ratio of 0.95: 0.05. Mechanically mixing the mixture with a three-dimensional vibratory ball mill at a speed of 1200 rpm for 60 min, and then sintering the mixture at 300 °C for 2 h to produce a positive electrode material, where the surface of the positive electrode material includes the N₄FPP polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Embodiment 3

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Weighing out a corresponding amount of the feedstocks FePO₄, and anhydrous Na₃PO₄ at the stoichiometric ratio of Na₃Fe₂(PO₄)P₂O₇ (N₃FPP). Putting the weighed feedstocks into a ball-milling jar. Milling the feedstocks by a wet ball-milling method in a planetary ball mill (the ball-milling medium is acetone), during which the ball-milling speed is 300 r/min, and the ball-milling duration is 3 h. Putting the ball-milled product into a vacuum oven for drying at 60 °C. Sintering the dried product into a nitrogen-filled vacuum tube furnace at 500 °C for 24 h, and then crushing the sintered product into powder, and sieving the powder to produce an N₃FPP polyanionic material. The Dᵥ₅₀ of the N₃FPP polyanionic material is 30 nm, and the Dᵥ₉₉ of the N₃FPP polyanionic material is 200 nm.

Mixing the Na₂Fe₂(SO₄)3-C composite material and the N₃FPP polyanionic material at a molar ratio of 0.95: 0.05. Mechanically mixing the mixture with a three-dimensional vibratory ball mill at a speed of 1200 rpm for 60 min to produce a positive electrode material, where the surface of the positive electrode material includes the N₃FPP polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Embodiment 4

Identical to Embodiment 2 except that in <Preparing a positive electrode material>, the molar ratio between the Na₂Fe₂(SO₄)3-C composite material and the N₄FPP is adjusted to 0.99: 0.01.

### Embodiment 5

Identical to Embodiment 2 except that in <Preparing a positive electrode material>, the molar ratio between the Na₂Fe₂(SO₄)3-C composite material and the N₄FPP is adjusted to 0.9: 0.1.

### Embodiment 6

Identical to Embodiment 2 except that in <Preparing a positive electrode material>, the mechanical mixing duration of the Na₂Fe₂(SO₄)3-C composite material and the N₄FPP is adjusted to 20 min, and accordingly, the parameters such as BET and coating rate are adjusted in accordance with Table 1.

### Embodiment 7

Identical to Embodiment 2 except that in <Preparing a positive electrode material>, the mechanical mixing duration of the Na₂Fe₂(SO₄)3-C composite material and the N₄FPP is adjusted to 100 min, and accordingly, the parameters such as BET and coating rate are adjusted in accordance with Table 1.

### Embodiment 8

Identical to Embodiment 2 except that in <Preparing a positive electrode material>, the mechanical mixing duration of the Na₂Fe₂(SO₄)3-C composite material and the N₄FPP is adjusted to 30 min, and accordingly, the parameters such as BET and coating rate are adjusted in accordance with Table 1.

### Embodiment 9

Identical to Embodiment 2 except that in <Preparing a positive electrode material>, the mechanical mixing duration of the Na₂Fe₂(SO₄)3-C composite material and the N₄FPP is adjusted to 10 min, and accordingly, the parameters such as BET and coating rate are adjusted in accordance with Table 1.

### Embodiment 10

Identical to Embodiment 2 except that in <Preparing a positive electrode material>, the precursor solution is spray-dried by using a spray-dryer, the inlet temperature is set to 160 °C, the feeding speed is adjusted to 180 mL/h, and accordingly, the particle diameter Dᵥ₅₀ of the positive electrode material is adjusted.

### Embodiment 11

Identical to Embodiment 2 except that in <Preparing a positive electrode material>, the mass percent of the acetylene black to the Na₂Fe₂(SO₄)₃ is adjusted to 0.5: 99.5.

### Embodiment 12

Identical to Embodiment 2 except that in <Preparing a positive electrode material>, the mass percent of the acetylene black to the Na₂Fe₂(SO₄)₃ is adjusted to 5: 95.

### Embodiment 13

Identical to Embodiment 2 except that in <Preparing a positive electrode material>, the inlet temperature is set to 200 °C, the mechanical mixing duration of the Na₂Fe₂(SO₄)3-C composite material and the N₄FPP is adjusted to 120 min, and accordingly, the BET is adjusted in accordance with Table 1.

### Embodiment 14

Identical to Embodiment 2 except that in <Preparing a positive electrode material>, the feeding speed is adjusted to 200 mL/h.

### Embodiment 15

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Preparing NaMnPO₄ by using an ion exchange method. Adding a MnSO₄ solution into the K₂HPO₄ solution, and keeping the temperature at 70 °C for 48 h, and then filtering the mixed solution to obtain a precursor KMnPO₄·H₂O. Mixing the precursor KMnPO₄·H₂O with an overdose of NaCH₃COO·3H₂O to produce a mixture. Heating the mixture to 200 °C at a speed of 10 °C/min. Sintering the mixture at this temperature for 15 h, and then cooling the sintered product to a room temperature, and washing off the unreacted salts by use of water to obtain a solid product. Finally, washing the solid product with a small amount of ethanol, filtering the solid product, and drying the filtered product in air for 5 h to obtain a NaMnPO₄ polyanionic material. The Dᵥ₅₀ of the NaMnPO₄ polyanionic material is 30 nm, and the Dᵥ₉₉ of the NaMnPO₄ polyanionic material is 200 nm.

Mixing the Na₂Fe₂(SO₄)3-C composite material and the NaMnPO₄ polyanionic material at a molar ratio of 0.95: 0.05. Mechanically mixing the mixture with a three-dimensional vibratory ball mill at a speed of 1200 rpm for 60 min, and then sintering the mixture at 300 °C for 2 h to produce a positive electrode material, where the surface of the positive electrode material includes the NaMnPO₄ polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Embodiment 16

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Weighing out feedstocks NaHCO₃, FeC2O₄·2H₂O, and (NH₄)₂HPO₄ (at a stoichiometric ratio of 2: 1: 2) by following the stoichiometric ratio of Na₂FeP₂O₇, and performing conventional solid-phase synthesis on the feedstocks to produce a starting insertion compound Na₂FeP₂O₇. Performing wet planetary ball milling on the starting insertion compound in an acetone medium (at a rotational speed of 400 rpm) for 3 hours by use of a Cr-SS stainless steel milling medium and vessel to produce a mixture. Vacuum-drying the mixture, and then grinding the mixture in an agate mortar. Pressing the mixture into cylindrical particles (12 mm in diameter), and annealing the particles in a tube furnace in a stable Ar-H₂ (95: 5 by volume) atmosphere at 600 °C (at a heating rate of 10 °C/min) for 12 h to maintain a reducing atmosphere. Subsequently, cooling down to a room temperature. Finally, sieving the particles to obtain a pure-phase Na₂FeP₂O₇ polyanionic material. The Dᵥ₅₀ of the Na₂FeP₂O₇ polyanionic material is 30 nm, and the Dᵥ₉₉ of the Na₂FeP₂O₇ polyanionic material is 200 nm.

Mixing the Na₂Fe₂(SO₄)3-C composite material and the Na₂FeP₂O₇ polyanionic material at a molar ratio of 0.95: 0.05. Mechanically mixing the mixture with a three-dimensional vibratory ball mill at a speed of 1200 rpm for 60 min, and then sintering the mixture at 300 °C for 2 h to produce a positive electrode material, where the surface of the positive electrode material includes the Na₂FeP₂O₇ polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Embodiment 17

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm.

Using 1.0 mol of cetyltrimethylammonium bromide (CTAB for short, molecular formula: CH₃(CH₂)₁₅NBr(CH₃)₃) as a cationic surfactant, mixing the surfactant with pure ethanol and deionized water (12: 1 by volume) to form a solution, and adding the solution into a glass vial. Stirring the solution for 90 min to form micelles. Subsequently, adding sodium fluoride into the micelles, and then adding oxalic acid dihydrate (C₂H₂O₄·2H₂O) and vanadium oxide (V₂O₅). The added oxalic acid acts as a reducing agent to reduce V⁵⁺ to V³⁺. Stirring the solution for 30 min. Subsequently, adding NH₄H₂PO₄: V₂O₅ (at a molar ratio of 2: 1) into the solution. Magnetizing and stirring the green solution at a room temperature for 24 h to form a homogeneous precursor mixture. Subsequently, evaporating the solvent by using a rotary evaporator (model: Heidolph Hei-VAP Expert Control ML/G3). Grinding the dried green solid, and then calcining the solid in a 780 °C tube furnace (model: Carbolite Limited, UK) in an argon atmosphere for 6 h. Finally, sieving the solid to obtain a NaVPO₄F polyanionic material. The Dᵥ₅₀ of the NaVPO₄F polyanionic material is 30 nm, and the Dᵥ₉₉ of the NaVPO₄F polyanionic material is 200 nm.

Mixing the Na₂Fe₂(SO₄)3-C composite material and the NaVPO₄F polyanionic material at a molar ratio of 0.95: 0.05. Mechanically mixing the mixture with a three-dimensional vibratory ball mill at a speed of 1200 rpm for 60 min, and then sintering the mixture at 300 °C for 2 h to produce a positive electrode material, where the surface of the positive electrode material includes the NaVPO₄F polyanionic material and the carbon material. The particle diameter Dᵥ₅₀ of the positive electrode material is shown in Table 1. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Embodiment 18

Identical to Embodiment 2 except that in <Preparing a positive electrode material>, the feeding speed is adjusted to 450 mL/h.

### Embodiment 19

Identical to Embodiment 1 except that, in <Preparing a positive electrode plate>, the cold-pressing pressure is adjusted to 45 T, and accordingly, the compaction density of the positive electrode plate is adjusted in accordance with Table 1.

### Comparative Embodiment 1

Identical to Embodiment 1 except that <Preparing a positive electrode material> is different from that in Embodiment 1.

### <Preparing a positive electrode material>

Adding the feedstock anhydrous Na₂SO₄ and FeSO₄·7H₂O solution into deionized water at a stoichiometric ratio of Na₂Fe₂(SO₄)₃ to form a solution. Adding C₆H₈O₆ (the mass percent of C₆H₈O₆ in the solution is 3%) and acetylene black (the mass ratio of acetylene black to Na₂Fe₂(SO₄)₃ is 2: 98) into the solution, and stirring at a speed of 1500 r/min at a room temperature for 6 h to obtain a precursor solution. Spray-drying the precursor solution by use of a spray-dryer to produce a dried precursor, during which the inlet temperature is 180 °C, the outlet temperature is 80 °C, and the feeding speed is 350 mL/h. Calcining the dried precursor at 350 °C in an argon atmosphere for 24 h, crushing the precursor into powder, and sieving the powder to produce a Na₂Fe₂(SO₄)₃-carbon composite material (Na₂Fe₂(SO₄)₃-C) with Dᵥ₅₀ of 4.2 µm. The material at this time is in an intact state.

Spreading 10 g of the intact material flat in a 100 cm² petri dish, and then placing the petri dish together with the material in a humidity chamber at 25 °C and RH 50% for 10 days, and then taking out the petri dish. After being treated in the humidity chamber, the material is in an A2 state.

### Comparative Embodiment 2

Identical to Embodiment 2 except that in <Preparing a positive electrode material>, the mass percent of the acetylene black to the Na₂Fe₂(SO₄)₃ is adjusted to 0.1: 99.9.

### Comparative Embodiment 3

Identical to Embodiment 2 except that in <Preparing a positive electrode material>, the mass percent of the acetylene black to the Na₂Fe₂(SO₄)₃ is adjusted to 7: 93.

### Comparative Embodiment 4

Identical to Embodiment 2 except that in <Preparing a positive electrode material>, the molar ratio between the Na₂Fe₂(SO₄)3-C composite material and the N₄FPP is adjusted to 0.8: 0.2.

Table 1 shows the preparation parameters and electrical performance parameters in each embodiment and each comparative embodiment.

**Table 1**

| | Type of matrix material | Type of polyanionic material | (1-A): A | Coating rate | BET (m²/g) | C (%) | Dᵥ₅₀ of positive electrode material (µm) | Intact state | | | A2 state |
|---|---|---|---|---|---|---|---|---|---|---|---|
| | | | | | | | | ρ (g/cm³) | CD (g/cm³) | Specific capacity C1 (mAh/g) | Specific capacity C2 (mAh/g) |
| Embodiment 1 | Na₂Fe₂(SO₄)₃ | Na₃V₂(PO₄)₃ | 0.95: 0.05 | 95.60% | 11 | 2 | 4.1 | 1.1 | 1.87 | 98 | 97 |
| Embodiment 2 | Na₂Fe₂(SO₄)₃ | Na₄Fe₃(PO₄)₂P₂O₇ | 0.95: 0.05 | 94.70% | 12 | 2 | 4.2 | 1 | 1.84 | 100 | 100 |
| Embodiment 3 | Na₂Fe₂(SO₄)₃ | Na₃Fe₂(PO₄)P₂O₇ | 0.95: 0.05 | 95.10% | 12 | 2 | 4.1 | 1 | 1.85 | 100 | 99 |
| Embodiment 4 | Na₂Fe₂(SO₄)₃ | Na₄Fe₃(PO₄)₂P₂O₇ | 0.99: 0.01 | 9.20% | 12 | 2 | 4.1 | 1 | 1.83 | 95 | 56 |
| Embodiment5 | Na₂Fe₂(SO₄)₃ | Na₄Fe₃(PO₄)₂P₂O₇ | 0.9: 0.1 | 95.30% | 12 | 2 | 4.2 | 1 | 1.82 | 102 | 101 |
| Embodiment 6 | Na₂Fe₂(SO₄)₃ | Na₄Fe₃(PO₄)₂P₂O₇ | 0.95: 0.05 | 30.14% | 18.2 | 2 | 4.2 | 1 | 1.81 | 99 | 67 |
| Embodiment 7 | Na₂Fe₂(SO₄)₃ | Na₄Fe₃(PO₄)₂P₂O₇ | 0.95: 0.05 | 96.10% | 10 | 2 | 4.5 | 1 | 1.82 | 99 | 99 |
| Embodiment 8 | Na₂Fe₂(SO₄)₃ | Na₄Fe₃(PO₄)₂P₂O₇ | 0.95: 0.05 | 45.70% | 16.8 | 2 | 4.1 | 1 | 1.89 | 99 | 63 |
| Embodiment 9 | Na₂Fe₂(SO₄)₃ | Na₄Fe₃(PO₄)₂P₂O₇ | 0.95: 0.05 | 10.20% | 23.1 | 2 | 4.2 | 1 | 1.83 | 99 | 61 |
| Embodiment 10 | Na₂Fe₂(SO₄)₃ | Na₄Fe₃(PO₄)₂P₂O₇ | 0.95: 0.05 | 95.20% | 13 | 2 | 1.1 | 1 | 1.87 | 103 | 102 |
| Embodiment 11 | Na₂Fe₂(SO₄)₃ | Na₄Fe₃(PO₄)₂P₂O₇ | 0.95: 0.05 | 94.50% | 12 | 0.5 | 4.2 | 1.1 | 1.85 | 92 | 90 |
| Embodiment 12 | Na₂Fe₂(SO₄)₃ | Na₄Fe₃(PO₄)₂P₂O₇ | 0.95: 0.05 | 94.50% | 12 | 5 | 4.2 | 0.9 | 1.75 | 92 | 92 |
| Embodiment 13 | Na₂Fe₂(SO₄)₃ | Na₄Fe₃(PO₄)₂P₂O₇ | 0.95: 0.05 | 94.70% | 0.5 | 2 | 8 | 1 | 1.8 | 95 | 95 |
| Embodiment **14** | Na₂Fe₂(SO₄)₃ | Na₄Fe₃(PO₄)₂P₂O₇ | 0.95: 0.05 | 94.50% | 15 | 2 | 2.0 | 1 | 1.81 | 102 | 102 |
| Embodiment 15 | Na₂Fe₂(SO₄)₃ | NaMnPO₄ | 0.95: 0.05 | 94.70% | 12 | 2 | 4.2 | 1.1 | 1.83 | 94 | 93 |
| Embodiment 16 | Na₂Fe₂(SO₄)₃ | Na₂FeP₂O₇ | 0.95: 0.05 | 94.70% | 12 | 2 | 4.2 | 1 | 1.82 | 92 | 91 |
| Embodiment 17 | Na₂Fe₂(SO₄)₃ | NaVPO₄F | 0.95: 0.05 | 94.70% | 12 | 2 | 4.2 | 1 | 1.85 | 103 | 102 |
| Embodiment 18 | Na₂Fe₂(SO₄)₃ | Na₄Fe₃(PO₄)₂P₂O₇ | 0.95: 0.05 | 94.20% | 13.5 | 2 | 4.7 | 0.8 | 1.71 | 100 | 97 |
| Embodiment 19 | Na₂Fe₂(SO₄)₃ | Na₃V₂(PO₄)₃ | 0.95: 0.05 | 95.60% | 11 | 2 | 4.1 | 1.1 | 1.6 | 95 | 94 |
| Comparative Embodiment 1 | Na₂Fe₂(SO₄)₃ | / | / | / | 8.3 | 0 | 4.2 | 1 | 1.83 | 94 | 31 |
| Comparative Embodiment 2 | Na₂Fe₂(SO₄)₃ | Na₄Fe₃(PO₄)₂P₂O₇ | 0.95:0.05 | 94.90% | 11 | 0.1 | 4.3 | 1 | 1.82 | 85 | 84 |
| Comparative Embodiment 3 | Na₂Fe₂(SO₄)₃ | Na₄Fe₃(PO₄)₂P₂O₇ | 0.95:0.05 | 95.30% | 28.9 | 7 | 4.1 | 1 | 1.89 | 91 | 90 |
| Comparative Embodiment **4** | Na₂Fe₂(SO₄)₃ | Na₄Fe₃(PO₄)₂P₂O₇ | 0.8: 0.2 | 96.10% | 13 | 2 | 4.8 | 1 | 1.82 | 83 | 83 |

| | | | | | | | | | | | |
|---|---|---|---|---|---|---|---|---|---|---|---|
| Note: "/" in Table 1 indicates absence of the relevant preparation parameter. | | | | | | | | | | | |

Referring to Table 1, as can be seen from Embodiments 1 to 19 and Comparative Embodiments 1 to 4, the surface of the matrix material includes the polyanionic material of this application and the carbon material, and the types of the matrix material and the polyanionic material in the positive electrode material, the molar ratio between the matrix material and the polyanionic material, and the mass percent of the carbon material are controlled to fall within the ranges specified herein. Therefore, prepared sodium-ion secondary battery exhibits a relatively high specific capacity, indicating that the sodium-ion secondary battery prepared from the positive electrode material of this application exhibits good electrochemical performance.

The coating rate of the polyanionic material and carbon material on the matrix material, the specific surface area of the positive electrode material, the particle diameter Dᵥ₅₀ of the positive electrode material, the tap density of the positive electrode material, and the compaction density of the positive electrode plate usually affect the electrochemical performance of the sodium-ion secondary battery. As can be seen from Embodiments 1 to 19, the electrochemical performance of the sodium-ion secondary battery can be favorably further improved by controlling the coating rate of the polyanionic material and carbon material on the matrix material, the specific surface area of the positive electrode material, the particle diameter Dᵥ₅₀ of the positive electrode material, the tap density of the positive electrode material, and the compaction density of the positive electrode plate to fall within the ranges specified herein.

The specific surface area is usually correlated with the particle size. For the materials synthesized under the same conditions, the smaller the particle size, the larger the specific surface area. In this application, the surface of the NFSO includes a polyanionic material and a carbon material. The polyanionic material is a nanomaterial. The nanomaterial is of a relatively small particle size and a relatively large specific surface area. The carbon material is also of a relatively large specific surface area. When the mixing duration is relatively short, the coating rate of the polyanionic material and carbon material on the NFSO is relatively low, and the polyanionic material and carbon material exist independently from the NFSO. Due to the additional factor of the relatively large specific surface areas of the materials, the specific surface areas of the polyanionic material and carbon material are decisive to the specific surface area test result of the positive electrode material.

What is described above is merely optional embodiments of this application, but not intended to limit the protection scope of this application. Any modifications, equivalent replacements, improvements, and the like made without departing from the essence and principles of this application still fall within the protection scope of this application.

## Claims

1. A positive electrode material, **characterized in that**, the positive electrode material comprises a matrix material Na₂Fe₂(SO₄)₃, a surface of the matrix material comprises a polyanionic material and a carbon material; and the polyanionic material comprises at least one of a phosphate compound, a NASICON compound, a pyrophosphate compound, or a fluorinated phosphate compound;
a molar ratio between the matrix material and the polyanionic material is (1-A): A, wherein 0 < A≤ 0.1; and
based on a mass of the positive electrode material, a mass percent of the carbon material is C%, and 0.5 ≤ C ≤ 5.

2. The positive electrode material according to claim 1, **characterized in that** a part of the surface of the matrix material is covered by the polyanionic material and the carbon material, and a coating rate of the polyanionic material and the carbon material on the matrix material is greater than or equal to 50%.

3. The positive electrode material according to claim 1 or claim 2, **characterized in that** a specific surface area of the positive electrode material is BET m²/g, and 0.5 ≤ BET ≤ 15.

4. The positive electrode material according to any one of claims 1-3, **characterized in that** a particle diameter Dᵥ₅₀ of the positive electrode material is 2 µm to 8 µm.

5. The positive electrode material according to any one of claims 1-4, **characterized in that** a tap density of the positive electrode material is ρ g/cm³, and ρ > 0.8.

6. The positive electrode material according to any one of claims 1-5, **characterized in that** the phosphate compound comprises NaMPO₄, wherein M is selected from Fe or Mn; the NASICON compound comprises NaₓQ₂(XO₄)₃, wherein 1 ≤ x ≤ 4, Q comprises at least one selected from the group consisting of V, Fe, Ni, Mn and Ti, and X comprises at least one selected from the group consisting of P, S and Si; the pyrophosphate compound comprises NaₘZ(PO₄)ₙ(P₂O₇)_{q}, wherein 2 ≤ m < 10, 0 ≤ n ≤ 4, 1 ≤ q < 10, and Z comprises at least one selected from the group consisting of Fe, Mn, and Co; and the fluorinated phosphate compound comprises at least one of NaVPO₄F or Na₃(VO_{1-y}PO₄)₂F_{1+2y}, wherein 0 ≤ y < 1.

7. The positive electrode material according to any one of claims 1-6, **characterized in that** a Dᵥ₅₀ of the polyanionic material is 20 nm to 100 nm, and a Dᵥ₉₉ of the polyanionic material is 20 nm to 200 nm.

8. A positive electrode plate, **characterized in that** the positive electrode plate comprises the positive electrode material according to any one of claims 1 to 7.

9. The positive electrode plate according to claim 8, **characterized in that** a compaction density of the positive electrode plate is CD g/cm³, and CD ≥ 1.6.

10. A sodium-ion secondary battery, **characterized in that** the sodium-ion secondary battery comprises the positive electrode plate according to claim 8 or claim 9.

11. An electrical device, **characterized in that** the electrical device comprises the sodium-ion secondary battery according to claim 10.
